# FASCICULE DE BREVET EUROPEEN

(11) **EP 1 679 972 B1**
(45) Date de publication et mention de la délivrance du brevet: **26.08.2009**
(21) Numéro de dépôt: 04805323.5
(22) Date de dépôt: 27.10.2004
(51) Int. Cl.: A23C 9/123

(54) **AROMATISATION D'UN PRODUIT LAITIER A PARTIR D'AU MOINS UNE BACTERIE PRODUISANT UNE BACTERIOCINE ET APPARTENANT AU GENRE PEDIOCOCCUS**
AROMATISIERUNG EINES MILCHPRODUKTS MIT MINDESTENS EINEM BAKTERIUM, DAS EIN BAKTERIOZIN PRODUZIERT UND ZUR GATTUNG PEDIOCOCCUS GEHÖRT
AROMATIZATION OF A MILK PRODUCT USING AT LEAST ONE BACTERIA PRODUCING A BACTERIOCIN AND BELONGING TO THE PEDIOCOCCUS GENUS

(30) Priorité: 31.10.2003 FR 0312807
(43) Date de publication de la demande: 19.07.2006
(73) Titulaire: DANISCO A/S, 1411 Copenhagen K. (DK)
(72) Inventeur: GOODWINS, Jonathan, F-86220 Les Ormes (FR); MORNET, Annie, F-86230 Mondion (FR); MANOURY, Elise, F-86100 Chatellerault (FR)
(74) Mandataire: Nargolwalla, Cyra
(86) Numéro de dépôt international: PCT/FR2004/002766
(87) Numéro de publication internationale: WO 2005/041675

(56) Documents cités:
- EP-A- 0 574 681
- US-A- 4 880 743
- LITOPOULOU-TZANETAKI E ET AL: "Biotechnologically important metabolic activities of pediococcus isolates from milk and cheese" MICROBIOLOGIE ALIMENTS NUTRITION 1989 FRANCE, vol. 7, no. 2, 1989, pages 113-122, XP009032098 ISSN: 0759-0644
- BHOWMIK T ET AL: "CHARACTERISTICS OF LOW-FAT CHEDDAR CHEESE MADE WITH ADDED MICROCOCCUS OR PEDIOCOCCUS SPECIES" MILCHWISSENSCHAFT, VV GMBH VOLKSWIRTSCHAFTLICHER VERLAG. MUNCHEN, DE, vol. 45, no. 4, 1990, pages 230-235, XP000134265 ISSN: 0026-3788
- ANONYMOUS: "Low-fat Cheddar taste improved by adding Pediococcus bacteria." MODERN DAIRY 1992, vol. 71, no. 1, février 1999 (1999-02), page 28, XP009032087

## Description

La présente invention a pour objet l'utilisation d'au moins une bactérie produisant une bactériocine et appartenant au genre *Pediococcus* pour aromatiser un produit laitier.

La fabrication des produits laitiers nécessite l'utilisation de différents microorganismes ayant des rôles spécifiques en technologie alimentaire.

Notamment les bactéries lactiques sont utilisées pour l'acidification du lait ce qui provoque la fermentation du lait en caillé. Concernant ces bactéries lactiques, on parle également de ferments ou de starters.

D'autres microorganismes sont quant à eux utilisés pour l'affinage des fromages. Dans ce cas on parle de flore d'affinage ou de non-starters. Ces microorganismes permettent de transformer le caillé en un produit partiellement lipolysé, protéolysé, enrichi en composés aromatiques comme par exemple des acides aminés ou des acides gras. Les agents d'affinage les plus généralement utilisés sont ceux du genre *Arthrobacter, Candida, Corynebacterium, Debaryomyces, Geotrichum, Kluyveromyces, Lactobacillus, Lactococcus, Leuconostoc, Micrococcus, Pediococcus, Propionibacterium, Rhodotorula, Saccharomyces, Staphylococcus, Streptococcus* ou *Penicillium* comme par exemple *Penicillium roqueforti* pour l'affinage du roquefort.

L'affinage est d'une grande importance pour donner de la flaveur au produit laitier.

Or l'addition d'agents d'affinage traditionnels aux ferments d'acidification est insuffisante dans certains cas, pour développer la flaveur souhaitée dans le produit laitier. En effet les agents d'affinage traditionnels ne jouent pas toujours leur rôle au cours du processus d'affinage et ne permettent pas d'aromatiser suffisamment le produit laitier, en particulier lorsque la durée d'affinage est courte ou réduite. Dans ce cas le profil aromatique recherché n'est pas obtenu et d'autres flaveurs indésirables peuvent apparaîtrent comme par exemple l'amertume.

Litopoulou-Tzanetaki et al. (Litopoulou-Tzanetaki et al,1989, Microbiologie, Aliments, Nutrition 7(2): 113-122) décrit que des souches sélectionnées de pediococci peuvent être ajoutées aux ferments pour la production de produits laitiers.

EP 0574 681 A1 décrit un yaourt contenant de la bactériocine provenant de *Pediococcus acidilactici*.

Aussi afin de répondre aux exigences des industriels il est devenu nécessaire de trouver de nouveaux microorganismes susceptibles d'affiner et d'aromatiser les produits laitiers.

Aussi le problème que se propose de résoudre la présente invention est de fournir un moyen pour aromatiser les produits laitiers de manière significative et rapide.

Dans ce but l'invention propose l'utilisation d'au moins une bactérie produisant une bactériocine et appartenant au genre *Pediococcus* pour aromatiser un produit laitier caractérisée en ce que la bactérie appartenant au genre Pediococcus est la bactérie Pediococcus acidilactici déposée à la CNCM le 20 octobre 2003 au nom de Rhodia Chimie, 26 Quai Alphonse Gallo, 92512 Boulogne Billancourt, sous le numéro CNCM I-3113.

L'utilisation de cette bactérie produisant une bactériocine permet avantageusement d'inhiber par compétition des flores sauvages non désirées, qui se développent le plus souvent de manière opportuniste.

Un autre avantage de la présente invention est que cette bactérie produisant une bactériocine et appartenant au genre *Pediococcus* peut être utilisée conjointement avec des bactéries utilisées pour l'acidification du produit laitier, c'est à dire avec des ferments ou des bactéries dites starters.

Avantageusement l'utilisation d'au moins une bactérie produisant une bactériocine et appartenant au genre *Pediococcus* selon la revendication 1 permet d'aromatiser le produit laitier sans changer la technologie de fabrication du produit laitier, ni changer les paramètres de la cinétique d'acidification du produit laitier par exemple.

Enfin l'utilisation d'au moins une bactérie produisant une bactériocine et appartenant au genre *Pediococcus* selon la revendication 1 permet d'obtenir un produit laitier affiné de manière significative, ne présentant pas de mauvais goûts ou mauvaises odeurs.

Les expressions « affiné de manière significative » ou « aromatiser de manière significative », signifient différent par rapport à un produit laitier affiné de manière classique.

L'invention a encore pour avantage de permettre d'affiner le produit laitier à une température supérieure aux températures traditionnelles d'affinage comme par exemple à une température comprise entre 4°C et 15°C, et de préférence comprise entre 4°C et 10°C pour le Cheddar.

Un autre avantage de la présente invention est de permettre d'augmenter la vitesse d'affinage et d'obtenir un profil aromatique significatif déjà à partir de 6 mois d'affinage, parfois 4 mois d'affinage, en particulier pour le Cheddar.

D'autres avantages et caractéristiques de l'invention apparaîtront clairement à la lecture de la description et des exemples donnés à titre purement illustratifs et non limitatifs qui vont suivre.

L'invention concerne l'utilisation d'au moins une bactérie produisant une bactériocine et appartenant au genre *Pediococcus* pour aromatiser un produit laitier caractérisée en ce que la bactérie appartenant au genre Pediococcus est la bactérie Pediococcus acidilactici déposée à la CNCM le 20 octobre 2003 au nom de Rhodia Chimie, 26 Quai Alphone Gallo, 92512 Boulogne-Billancourt, sous le numéro CNCM I-3113.

Le genre *Pediococcus* appartient à la famille Streptococaceae. Les bactéries appartenant à ce genre sont des bactéries gram-positives, et généralement catalase-negatives, homofermentaires et produisant du lactate D ou L à partir de carbohydrates.

Les bactéries du genre *Pediococcus* sont naturellement présentes dans le lait et largement utilisées dans l'industrie alimentaire, et notamment l'industrie de la viande car elles permettent d'apporter de la texture et d'inhiber les flores indésirables dont les flores pathogènes dans les produits de charcuterie.

Avantageusement la bactérie produisant une bactériocine et appartenant au genre *Pediococcus* peut être associée à au moins une bactérie sensible à ladite bactériocine.

Par l'expression « sensible à la bactériocine » on entend une bactérie qui peut être tuée ou lysée ou encore dont la croissance est ralentie ou stoppée, par la présence et / ou l'action de ladite bactériocine.

Par bactériocine, on entend une substance peptidique sécrétée par des bactéries lactiques, et possédant des propriétés bactéricides ou bactériostatiques vis à vis de diverses bactéries étrangères dites « sensibles ».

Avantageusement la bactérie produisant une bactériocine et appartenant au genre *Pediococcus* peut être associée à au moins une bactérie sensible à ladite bactériocine choisi parmi les bactéries lactiques des genres *Lactococcus, Lactobacillus, Pediococcus, Leuconostoc, Streptococcus.*

Les bactéries appartenant au genre *Pediococcus* font partie des bactéries dites NSLAB (« Non Starter Lactic Acid Bacteria » en anglais) qui sont des bactéries lactiques ne contribuant pas significativement à l'acidification.

L'utilisation d'au moins une bactérie produisant une bactériocine et appartenant au genre *Pediococcus* selon la revendication 1 permet d'obtenir une intensité aromatique marquée dans les produits laitiers, ainsi que des caractères sucré et bouillon de viande plus marqués et une amertume significativement plus faible, par rapport au même produit laitier réalisé sans addition de ladite bactérie.

Le produit laitier aromatisé selon l'invention peut aussi être un lait fermenté.

De préférence le produit laitier selon l'invention comprend du lait d'origine animale et/ou végétale.

A titre de lait d'origine animale on peut citer le lait de vache, de brebis, de chèvre, de chamelle ou de bufflesse.

A titre de lait d'origine végétale on peut citer toute substance fermentescible d'origine végétale qui peut être utilisée selon l'invention notamment provenant de graine de soja, de riz, de coco ou de malt.

Parmi les produits laitiers aromatisés selon l'invention on peut citer entre autres les fromages à pâte molle, à pâte pressée non cuite, à pâte cuite, à pâte filée, à pâte fraîche, à pâte persillée, les fromages fondus ou le Cottage Cheese, ainsi que le yaourt, la crème maturée, les boissons lactées, un rétentat de produit laitier ou un lait infantile.

Parmi les fromages aromatisés selon l'invention on peut citer entre autres le Banon, le Bleu d'Auvergne, le Brie, la Boulette d'Avesne, le Caerphilly, le Camembert, le Cantal, le Carré de l'Est, le Chanco, le Chaource, le Cheddar, le Cheshire, le Cotija, le Coulommiers, le Danbo, le Dauphin, le Double Gloucester, l'Edam, l'Emmental, l'Epoisse, la Feta, le Gorgonzola, le Gouda, le Jarlsberg, le Limburger, le Livarot, la Mimolette, le Manchego, le Maroilles, le Monterey Jack, la Mozzarella, le Munster, le type Parmesan, le Pélardon, le Pont l'Evêque, la Raclette, le Red Leicester, le Roquefort, le Saint-Félicien, le Saint-Marcellin, le Saint-Nectaire, le Saint-Paulin, le Stilton, le Tilsit, la Tomme de Savoie, le Vacherin Mont-D'or, le Vieux-Lille.

L'utilisation de la bactérie selon l'invention pour aromatiser un produit laitier se fait de manière classique pour l'homme du métier. Dans le cas de la fabrication d'un produit laitier, celle-ci sera réalisée de manière habituelle dans ce domaine, et notamment par fermentation d'un produit laitier par incorporation d'un ferment.

Notamment il est possible de mélanger au moins une bactérie produisant une bactériocine et appartenant au genre *Pediococcus* directement avec les ferments lactiques ou le grand levain utilisés pour fabriquer le produit laitier. Dans ce cas la bactérie selon l'invention peut être préalablement mélangée aux ferments lactiques ou au grand levain quelque soit son état liquide ou solide et quelque soit sa forme sèche, lyophilisée ou congelée. Il est également envisageable d'utiliser la bactérie selon l'invention pendant l'étape d'acidification du produit laitier ou d'ajouter celle-ci au cours de la fabrication.

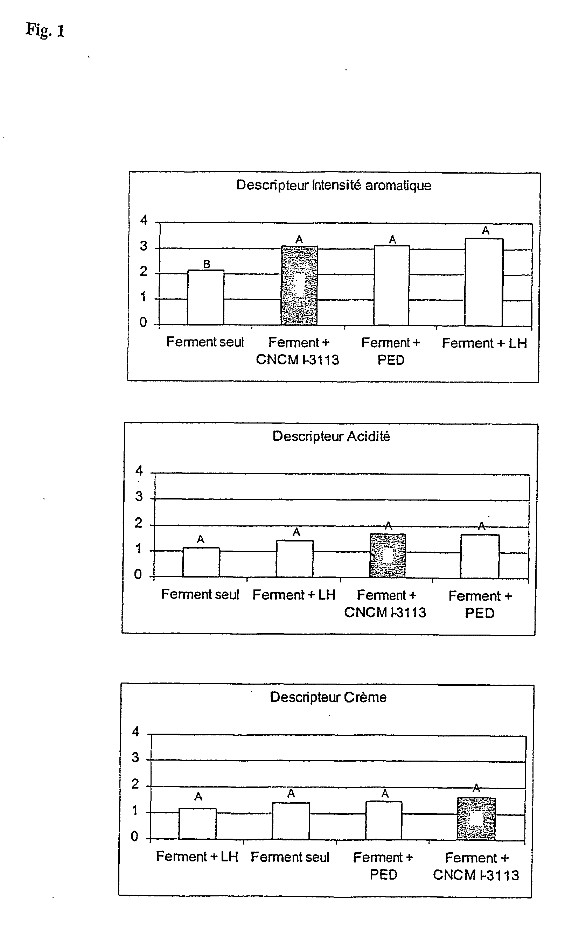

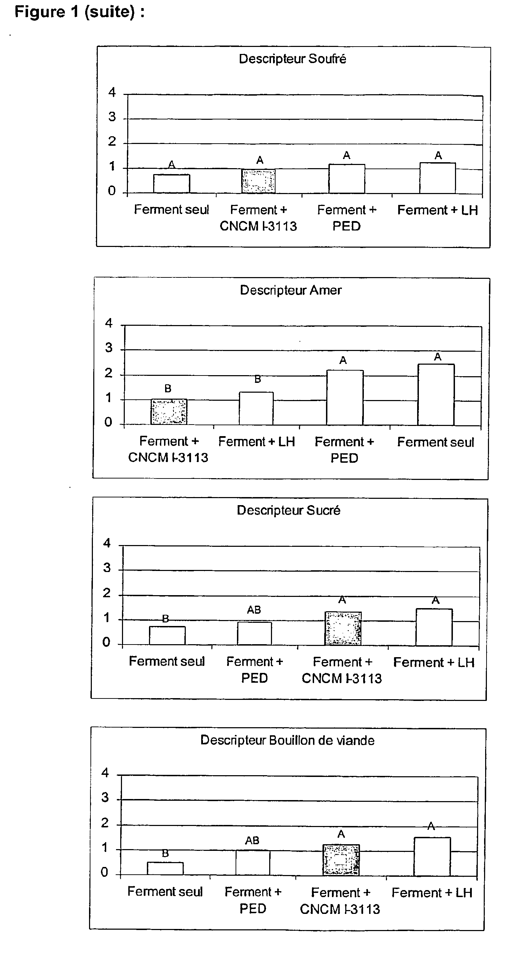

La figure 1 représente les moyennes des notes obtenues sur les descripteurs de flaveur pour chacun des fromages du type Cheddar de l'étude. Interprétation des résultats du test de Newman-Keuls : la différence entre les fromages du type Cheddar reliés par une même lettre n'est pas significative.

Les exemples suivants illustrent l'invention sans toutefois en limiter la portée.

EXEMPLE : Caractérisation sensorielle du ferment associé à la bactérie CNCM I-3113, et comparaison avec le ferment seul et avec le ferment associé soit à une bactérie *Lactobacillus helveticus* (LH) soit à une autre bactérie *Pediococcus pentosaceus* ne produisant pas de bactériocine (PED)

### Préparation de fromage du type Cheddar :

Un lait est reconstitué à partir de poudre de lait écrémé et de chlorure de calcium (35 ml d'une solution de Calciol Marschall^{®} à 500 g/l pour 100 litres de lait). Le temps de dissolution des poudres est d'environ 30 minutes. Ce lait ainsi obtenu est stocké 24 heures à 10°C.

Puis une quantité de crème est ajoutée afin d'obtenir une composition en matière grasse de 44 grammes par litre de lait ainsi que le ferment d'acidification à raison de 2.10E+6 ufc/ml (unité formant colonie/ml) et la souche à tester (soit la souche CNCM I-3113 ou LH ou PED) à raison de 10E+6 ufc/ml environ à 32°C en mini-cuve. De la présure, ayant une concentration en chymosine de 520 mg de chymosine / litre de présure, est ajoutée au lait à raison de 25ml de présure /100 litres de lait. Le pH est enregistré au cours de la fabrication à l'aide d'un pH mètre KNICK PORTAMESS^{®} et d'une électrode de pH de pénétration lot 406-M6-DXK-S7/25 Metttler Toledo. La durée de la coagulation est de 60 minutes environ.

Le caillé obtenu est découpé. L'ensemble, caillé et sérum, est chauffé à 40°C. Le sérum qui s'est formé est soutiré. Puis on attend que le caillé ait atteint un pH de 5,20 pour pouvoir saler le caillé avec 3% de NaCl, pourcentage exprimé en masse par rapport à la masse du produit fini. Le caillé est ensuite placé dans des moules puis pressé.

Les fromages du type Cheddar ainsi fabriqués sont mis sous films imperméables 24 heures après inoculation par le ferment et placés dans une étuve ventilée à 8°C, jusqu'à leur analyse sensorielle 6 mois plus tard.

### Analyse sensorielle:

Les Cheddars ainsi obtenus ont été évalués en analyse sensorielle après 6 mois de stockage à 8°C. L'analyse descriptive quantitative des Cheddars, maintenus à une température optimale de dégustation de 14°C, a été réalisée par un jury de 15 experts sur une échelle linéaire non structurée de 0 à 6 points. Cette analyse de profil sensoriel a été dupliquée à quelques jours d'intervalle. Les juges, préalablement sélectionnés et entraînés, ont effectué leur évaluation sur 7 descripteurs de flaveur : intensité aromatique, acidité, soufré, crème, sucré, amer et bouillon de viande. Les différences sensorielles ont été évaluées par une analyse de variance (dénommée ANOVA) à deux facteurs, modèle fixe, suivie d'un test de comparaison de moyenne de Newman-Keuls avec un seuil alpha de 5% sur chacun des descripteurs. Les logiciels utilisés pour ces analyses statistiques sont Fizz^{®} (Biosystèmes) et Statgraphics^{®}.

Les données concernant le fromage Cheddar obtenu avec le ferment additionné de la bactérie CNCM I-3113 ont été confrontées à celles des Cheddars obtenus avec le ferment seul et le ferment additionné des autres bactéries de référence (LH ou PED). Les valeurs moyennes obtenues pour les descripteurs de flaveur retenus sont indiquées dans le tableau 1 et les différences significatives ressortant de l'ANOVA et du test de comparaison de moyennes sont répertoriées dans le tableau 2 et la figure 1.

**Tableau 1 : Moyenne des notes attribuées par le jury d'analyse sensorielle pour les cheddars obtenus avec les différentes bactéries des essais sur les descripteurs de flaveur**

| **Cheddars** | **Intensité aromatique** | **Acidité** | **Crème** | **Soufré** | **Amer** | **Sucré** | **Bouillon de viande** |
|---|---|---|---|---|---|---|---|
| **Ferment seul** | 2,13 | 1,13 | 1,39 | 0,75 | 2,48 | 0,73 | 0,50 |
| **Ferment + CNCM I-3113** | 3,10 | 1,70 | 1,61 | 0,96 | 1,01 | 1,37 | 1,25 |
| **Ferment + LH** | 3,42 | 1,42 | 1,16 | 1,22 | 1,31 | 1,50 | 1,57 |
| **Ferment + PED** | 3,15 | 1,70 | 1,44 | 1,18 | 2,23 | 0,91 | 1,00 |

**Tableau 2 : Comparaison de moyennes sur chacun des descripteurs de flaveur par le test de Newman-Keuls à 5%. Interprétation des résultats : la différence entre les Cheddars reliés par une même lettre n'est pas significative**

| **Cheddars** | **Intensité aromatique** | **Acidité** | **Crème** | **Soufré** | **Amer** | **Sucré** | **Bouillon de viande** |
|---|---|---|---|---|---|---|---|
| **Ferment seul** | B | A | A | A | A | B | B |
| **Ferment + CNCM I-3113** | A | A | A | A | B | A | A |
| **Ferment + LH** | A | A | A | A | B | A | A |
| **Ferment + PED** | A | A | A | A | A | AB | AB |

La figure 1 montre une représentation par histogramme des résultats obtenus dans les tableaux 1 et 2 : Représentations graphiques des moyennes des notes obtenues sur les descripteurs de flaveur pour chacun des fromages du type des Cheddars de l'étude. Interpréprétation des résultats du test de Newman-Keus : la différence entre les fromages du type Cheddars reliés par une même lettre n'est pas significative.

L'addition de la bactérie CNCM I-3113 considérée comme aromatisante permet de modifier de manière significative les propriétés organoleptiques du Cheddar comparativement au Cheddar avec le ferment seul ou au Cheddar avec le ferment additionné de la bactérie PED. En effet, le Cheddar contenant le ferment additionné de la bactérie CNCM I-3113 se démarque du Cheddar contenant le ferment seul en ce sens qu'il possède une intensité aromatique, une saveur sucrée et un arôme bouillon de viande significativement plus prononcés et qu'il développe significativement moins d'amertume. Le Cheddar contenant le ferment additionné de la bactérie CNCM I-3113 se démarque du Cheddar contenant le ferment additionné de la bactérie PED en ce sens qu'il possède une amertume significativement plus faible. Le Cheddar fabriqué selon l'invention a également un profil aromatique non significativement différent de celui fabriqué avec le ferment additionné de la souche LH.

## Revendications

1. Utilisation d'au moins une bactérie produisant une bactériocine et appartenant au genre *Pediococcus* pour aromatiser un produit laitier, **caractérisée en ce que** la bactérie appartenant au genre *Pediococcus* est la bactérie *Pediococcus acidilactici* déposée à la CNCM le 20 octobre 2003 au nom de Rhodia Chimie, 26 Quai Alphonse Le Gallo, 92512 Boulogne-Billancourt, sous le numéro CNCM I-3113.

2. Utilisation selon la revendication précédente **caractérisée en ce que** la bactérie produisant une bactériocine et appartenant au genre *Pediococcus* est associée à au moins une bactérie sensible à ladite bactériocine.

3. Utilisation selon l'une des revendications précédentes **caractérisée en ce que** la bactérie produisant une bactériocine et appartenant au genre *Pediococcus* est associée à au moins une bactérie sensible à ladite bactériocine choisi parmi les bactéries lactiques des genres *Lactococcus, Lactobacillus, Pediococcus, Leuconostoc, Streptococcus.*

4. Utilisation selon l'une des revendications précédentes **caractérisée en ce que** le produit laitier est un lait fermenté

5. Utilisation selon l'une des revendications précédentes **caractérisée en ce que** le produit laitier est choisi parmi les fromages à pâte molle, à pâte pressée non cuite, à pâte cuite, à pâte filée, à pâte fraîche, à pâte persillée, les fromages fondus ou le Cottage Cheese, ainsi que le yaourt, la crème maturée, les boissons lactées, un rétentat de produit laitier ou un lait infantile.

6. Utilisation selon l'une des revendications précédentes **caractérisée en ce que** le produit laitier est le Cheddar.

## Claims

1. Use of at least one bacterium producing a bacteriocin and belonging to the genus *Pediococcus* to aromatize a milk product, **characterized in that** the bacterium belonging to the genus *Pediococcus* is the bacterium *Pediococcus acidilactici* deposited at the CNCM on 20^{th} October 2003 in the name of Rhodia Chimie, 26 quai Alphonse Le Gallo, 92512 Boulogne-Billancourt, with accession number I-3113.

2. Use according to the preceding claim, **characterized in that** the bacterium producing a bacteriocin and belonging to the genus *Pediococcus* is associated with at least one bacterium which is sensitive to said bacteriocin.

3. Use according to one of the preceding claims, **characterized in that** the bacterium producing a bacteriocin and belonging to the genus *Pediococcus* is associated with at least one bacterium which is sensitive to said bacteriocin selected from lactic bacteria from the genii *Lactococcus, Lactobacillus, Pediococcus, Leuconostoc* and *Streptococcus.*

4. Use according to one of the preceding claims, **characterized in that** the milk product is a fermented milk.

5. Use according to one of the preceding claims, **characterized in that** the milk product is selected from soft cheeses, uncooked pressed cheeses, cooked cheeses, Mozzarella type cheeses, fresh cheeses, blue cheeses, processed chesses or cottage cheese, as well as yoghourt, matured cream, milk drinks, milk by-products or baby milk.

6. Use according to one of the preceding claims, **characterized in that** the milk product is Cheddar.

## Patentansprüche

1. Verwendung von mindestens einem Bakterium, das ein Bakteriozin produziert und zur Gattung *Pediococcus* gehört, zur Aromatisierung eines Milchproduktes, **dadurch gekennzeichnet, dass** das Bakterium, das zur Gattung *Pediococcus* gehört, das Bakterium *Pediococcus acidilactici* ist, das bei der CNCM am 20. Oktober 2003 im Namen von Rhodia Chimie, 26 Quai Alphonse Le Gallo, 92512 Boulogne-Billancourt, unter der Nummer CNCM I-3113 hinterlegt wurde.

2. Verwendung gemäß dem vorhergehenden Anspruch, **dadurch gekennzeichnet, dass** das Bakterium, das ein Bakteriozin produziert und zur Gattung *Pediococcus* gehört, mit mindestens einem Bakterium assoziiert ist, das sensibel gegenüber diesem Bakteriozin ist.

3. Verwendung gemäß einem der vorhergehenden Ansprüche, **dadurch gekennzeichnet, dass** das Bakterium, das ein Bakteriozin produziert und zur Gattung *Pediococcus* gehört, mit mindestens einem Bakterium assoziiert ist, das sensibel gegenüber diesem Bakteriozin ist, ausgewählt aus den Milchsäurebakterien der Gattung *Lactococcus, Lactobacillus, Pediococcus, Leuconostoc, Streptococcus*.

4. Verwendung gemäß einem der vorhergehenden Ansprüche, **dadurch gekennzeichnet, dass** das Milchprodukt eine fermentierte Milch ist.

5. Verwendung gemäß einem der vorhergehenden Ansprüche, **dadurch gekennzeichnet, dass** das Milchprodukt ausgewählt ist aus Weichkäse, Schnittkäse, Hartkäse, Käse, der Fäden zieht, Frischkäse, Blauschimmelkäse, Schmelzkäse oder Hüttenkäse, sowie Jogurt, Creme maturèe, Milchgetränken, Retentat eines Milchproduktes oder einer Milch für Kinder.

6. Verwendung gemäß einem der vorhergehenden Ansprüche, **dadurch gekennzeichnet, dass** das Milchprodukt Cheddar ist.
